# EUROPÄISCHE PATENTSCHRIFT

(11) **EP 2 093 639 B1**
(45) Veröffentlichungstag und Bekanntmachung des Hinweises auf die Patenterteilung: **26.03.2014**
(21) Anmeldenummer: 08167901.1
(22) Anmeldetag: 30.10.2008
(51) Int. Cl.: G05B 19/042, G05B 19/408

(54) **Verfahren zur Inbetriebnahme einer Numerischen Steuerung**
Method of operating a numerical control
Procédé destiné à la mise en service d'une commande numérique

(30) Priorität: 20.02.2008 DE 102008010011
(43) Veröffentlichungstag der Anmeldung: 26.08.2009
(73) Patentinhaber: Dr. Johannes Heidenhain GmbH, 83301 Traunreut (DE)
(72) Erfinder: Rutkowski, Christian, 83278, Traunstein (DE); Winter, Helmut, 83119, Obing (DE)

(56) Entgegenhaltungen:
- EP-A2- 0 747 795
- DE-A1- 19 802 728
- FR-A1- 2 692 701
- US-A- 5 768 632

## Beschreibung

Die Erfindung betrifft ein Verfahren zur Inbetriebnahme einer Numerischen Steuerung. Solche Verfahren dienen dazu, eine Numerische Steuerung beim Einschalten korrekt zu initialisieren und ungewollte Zustände zu vermeiden, wie sie durch Änderungen in der Systemkonfiguration auftreten können.

Numerische Steuerungen werden eingesetzt, um die vielfältigen Möglichkeiten moderner Werkzeugmaschinen auszuschöpfen. Eine Numerische Steuerung erhält Informationen von einer Vielzahl von Sensoren und steuert eine Vielzahl von Aktoren gemäß eines Teileprogramms so, dass ein Rohling in die gewünschte Form gebracht werden kann. Die Konfiguration einer solchen Werkzeugmaschine bzw. einer Numerischen Steuerung kann dank moderner Bustechnologien zur Verbindung der Numerischen Steuerung mit den Sensoren und Aktoren und anderen Komponenten leicht verändert und neuen Gegebenheiten angepasst werden. Um die korrekte Funktion eines solchen Systems zu gewährleisten ist es daher unerlässlich, die Systemintegrität bei jedem Einschalten zu überprüfen. Dabei wird sichergestellt, dass die aktuelle Konfiguration noch unverändert der bisherigen Konfiguration entspricht, und damit ein sicherer Betrieb der Werkzeugmaschine bzw. der Numerischen Steuerung möglich ist.

Die FR 2692701 A1 beschreibt ein Verfahren, mit dem die Integrität einer Anlagenkonfiguration durch Vergleich einer aktuellen mit einer zuvor ermittelten älteren Konfiguration festgestellt werden kann. Dabei ist es im Falle von Änderungen möglich, die neue Konfiguration zu akzeptieren und als ältere Konfiguration zu speichern.

Aufgabe der Erfindung ist es, ein Verfahren zur Inbetriebnahme einer Numerischen Steuerung anzugeben, mit dem auf besonders einfache und schnelle Weise die Systemintegrität überprüft werden kann.

Diese Aufgabe wird gelöst durch ein Verfahren gemäß Anspruch 1. Vorteilhafte Ausgestaltungen des Verfahrens ergeben sich aus den von Anspruch 1 abhängigen Ansprüchen.

Vorteile und Einzelheiten der vorliegenden Erfindung ergeben sich aus der nachfolgenden Beschreibung einer bevorzugten Ausführungsform anhand der Figuren. Dabei zeigt
- Figur 1: eine Numerische Steuerung mit einer zentralen Komponente und mehreren dezentralen Komponenten,
- Figur 2: ein Ablaufdiagramm eines Inbetriebnahmeverfahrens.

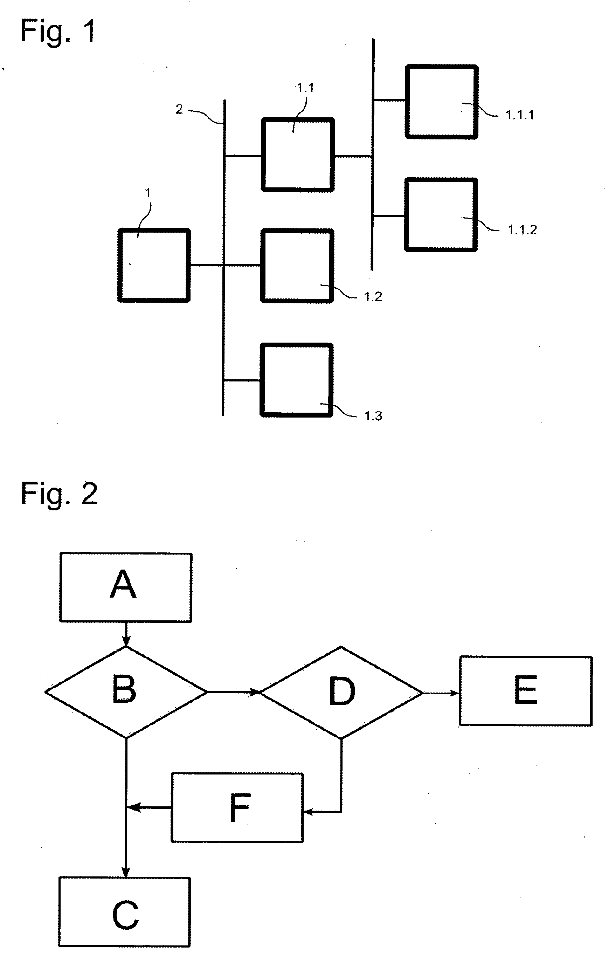

Figur 1 zeigt eine Numerische Steuerung mit einer zentralen Komponente 1 und mehreren, über einen Bus 2 angeschlossene dezentrale Komponenten 1.1, 1.2, 1.3, 1.1.1, 1.1.2.

Bei der zentralen Komponente 1 handelt es sich beispielsweise um den Hauptrechner der Numerischen Steuerung. Moderne Numerische Steuerungen verfügen oft über einen schnellen seriellen Bus 2 zum Abschließen der dezentralen Komponenten 1.1, 1.2, 1.3, 1.1.1, 1.1.2.

An jede direkt an den Hauptrechner 1 angeschlossene dezentrale Komponente 1.1, 1.2, 1.3 können weitere dezentrale Komponenten 1.1.1, 1.1.2 angeschlossen sein. Auch an diese können wiederum weitere dezentrale Komponenten angeschlossen sein.

Zur Inbetriebnahme der Numerischen Steuerung soll nun geprüft werden, ob sich seit der letzten erfolgreichen Inbetriebnahme Änderungen an der Systemkonfiguration ergeben haben. Solche Änderungen können darin bestehen, dass dezentrale Komponenten 1.1, 1.2, 1.3, 1.1.1, 1.1.2 neu hinzugekommen oder entfernt worden sind. Die Änderungen können aber auch darin bestehen, dass einzelne Komponenten ausgetauscht wurden, etwa weil sie defekt waren, oder dass eine Softwareversion in einer softwaregesteuerten Komponente geändert wurde. Alle diese Änderungen können zu einem anderen und eventuell unerwünschten Verhalten der Numerischen Steuerung bzw. der Werkzeugmaschine führen.

Figur 2 zeigt ein Ablaufdiagramm eines Inbetriebnahmeverfahrens, mit dem die Systemkonfiguration überprüft werden kann.

In einem Schritt A wird die aktuelle Systemkonfiguration eingelesen und in einer aktuellen Konfigurationsdatei abgelegt. Hierzu werden die zentrale Komponente 1 und über den Bus 2 alle an die zentrale Komponente 1 angeschlossenen dezentralen Komponenten 1.1, 1.2, 1.3, 1.1.1, 1.1.2 rekursiv eingelesen.

Betrachtet man die Systemkonfiguration als Baumstruktur, die sich ausgehend von der zentralen Komponente 1 zu den dezentralen Komponenten 1.1, 1.2, 1.3, 1.1.1, 1.1.2 verzweigt, so besteht eine Möglichkeit des rekursiven Einlesens der Systemkonfiguration darin, dass ein erster Ast ausgehend von der zentralen Komponente 1 bis zu seinem Ende eingelesen wird (also z.B. 1 -> 1.1 -> 1.1.1), dann von der letzten Verzweigung aus der nächste Ast bis zu dessen Ende erfasst wird (1.1.2), bis schließlich jeder Ast bis zu seinem Ende (1.2, 1.3) eingelesen ist.

Beim Erfassen der dezentralen Komponenten 1.1, 1.2, 1.3, 1.1.1, 1.1.2 werden aus diesen Informationen ausgelesen, die zu deren Identifikation dienen können. Dabei kann es sich beispielsweise um Typnummern, Seriennummern oder Versionsnummern handeln. Solche Informationen werden oft in sogenannten elektronischen Typenschildern abgelegt. Dabei handelt es sich um Speichereinrichtungen für Daten, die über eine Schnittstelle der jeweiligen Komponente zur Verfügung gestellt werden.

Die zentrale Komponente 1 liest auch ihr eigenes elektronisches Typenschild aus, so dass auch Änderungen wie der Austausch der Hardware oder Firmware der zentralen Komponente 1 erfasst werden.

Die im Schritt A erzeugte aktuelle Konfigurationsdatei weist eine Baumstruktur auf. Sie enthält sowohl Informationen über die Verknüpfung der einzelnen dezentralen Komponenten 1.1, 1.2, 1.3, 1.1.1, 1.1.2 untereinander und mit der zentralen Komponente 1, als auch über die zentrale Komponente 1 und die einzelnen dezentralen Komponenten 1.1, 1.2, 1.3, 1.1.1, 1.1.2 selbst.

Die aktuelle Konfigurationsdatei wird in einem für Menschen lesbaren Textformat wie beispielsweise dem ASCII - Format abgelegt und kann damit ganz einfach angezeigt oder ausgedruckt werden, so dass ein Benutzer den Inhalt erfassen kann.

In einem Schritt B wird die aktuelle Konfigurationsdatei mit einer zuletzt archivierten älteren Konfigurationsdatei verglichen. Hierzu wird sowohl von der älteren als auch von der aktuellen Konfigurationsdatei ein CRC - Code berechnet. Der Vergleich der beiden CRC - Codes ist einfacher und schneller als der direkte Vergleich der beiden Konfigurationsdateien.

Es bietet sich an, die älteren Konfigurationsdateien in einem komprimierten Datenarchiv zu archivieren. Eine Komprimierung führt besonders bei Dateien im Textformat zu erheblich verkleinerten Dateien. Ein geeignetes Format wäre beispielsweise das bekannte ZIP - Format. Die Spezifikation des ZIP - Formats sieht vor, zu jeder archivierten Datei auch einen CRC - Code abzuspeichern, um die Datenintegrität überwachen zu können. Es bietet sich daher an, zur Bildung des CRC - Codes der aktuellen Konfigurationsdatei den selben Algorithmus zu verwenden wie für die CRC - Codes im ZIP - Format. So kann zum Vergleich in Schritt (B) der im komprimierten Datenarchiv bereits enthaltene CRC - Code der älteren Konfigurationsdatei herangezogen werden.

Ergibt Schritt B, dass kein Unterschied zwischen der aktuellen Konfigurationsdatei und der zuletzt archivierten älteren Konfigurationsdatei besteht, so verzweigt das Verfahren zu Schritt C, in dem die Inbetriebnahme wie im Stand der Technik üblich fortgesetzt wird.

Wird jedoch im Schritt B ein Unterschied erkannt, so verzweigt das Verfahren zu Schritt D. In diesem Schritt D wird die Inbetriebnahme zunächst angehalten. Dann wird vom Benutzer abgefragt, ob die festgestellten Änderungen akzeptiert werden. Hierzu können dem Benutzer verschiedene Hilfestellungen angeboten werden. So kann dem Benutzer sowohl die ältere als auch die aktuelle Konfigurationsdatei angezeigt werden. Es kann dem Benutzer auch der Unterschied zwischen den beiden Konfigurationsdateien angezeigt werden. Schließlich kann dem Benutzer auch angezeigt werden, ob die aktuelle Konfiguration in einer noch älteren als der zuletzt archivierten Konfiguration schon einmal aufgetreten ist. Hierzu ist es nützlich, wenn mit jeder älteren Konfigurationsdatei das Datum und die Uhrzeit von deren Erstellung abgespeichert wird. Diese Informationen können beispielsweise als Teil des jeweiligen Dateinamens verwendet werden, um ein Verwechseln der einzelnen älteren Konfigurationsdateien auszuschließen.

Erkennt nun ein Benutzer, dass die Änderung nicht akzeptiert werden kann, etwa weil eine zum Betrieb der Werkzeugmaschine bzw. der Numerischen Steuerung erforderliche dezentrale Komponente 1.1, 1.2, 1.3, 1.1.1, 1.1.2 fehlt, so wird die Inbetriebnahme im Schritt E abgebrochen. Die aktuelle Konfigurationsdatei wird verworfen. Der Fehler kann dann behoben und eine erneute Inbetriebnahme gestartet werden.

Erkennt aber der Benutzer, dass die Unterschiede akzeptabel sind, etwa weil lediglich eine Komponente gegen eine Ersatzkomponente getauscht wurde (z.B. mit gleicher Typnummer, aber anderer Seriennummer), so verzweigt das Verfahren zu Schritt F.

Im Schritt F wird die aktuelle Konfigurationsdatei so umbenannt, dass sie Datum und Uhrzeit ihrer Erstellung enthält, und dann im komprimierten Dateiformat archiviert. Für das ZIP - Format existieren geeignete Werkzeuge, um einem Archiv einzelne Dateien hinzuzufügen.

Das Archiv der älteren Konfigurationsdateien wächst also mit jedem Schritt F um eine Konfigurationsdatei an, die einmal von einem Benutzer akzeptiert wurde. Es macht also durchaus Sinn, im Schritt D wie beschrieben die aktuelle Konfigurationsdatei auch mit älteren Konfigurationsdateien als der zuletzt gespeicherten Konfigurationsdatei zu vergleichen. Zudem enthält das Archiv der älteren Konfigurationsdateien eine Sammlung von früheren Zuständen, die zur Nachverfolgung von Änderungen nützlich sein kann.

Auf den Schritt F folgt Schritt C, also die vollständige Inbetriebnahme der Numerischen Steuerung bzw. der Werkzeugmaschine.

## Patentansprüche

1. Verfahren zur Inbetriebnahme einer Numerischen Steuerung, mit dem eine Systemkonfiguration von an die Numerische Steuerung angeschlossenen Komponenten überprüft wird, mit folgenden Schritten:
(A) Einlesen der aktuellen Systemkonfiguration und Erstellen einer aktuellen Konfigurationsdatei,
(B) Vergleichen der aktuellen Konfigurationsdatei mit einer zuletzt archivierten älteren Konfigurationsdatei,
(C) falls in Schritt (B) kein Unterschied festgestellt wird: Fortsetzen der Inbetriebnahme,
(D) falls in Schritt (B) ein Unterschied festgestellt wird: Anhalten der Inbetriebnahme und Abfragen, ob die festgestellte Änderung der Systemkonfiguration akzeptiert wird,
(E) falls die Änderung in Schritt (D) nicht akzeptiert wird: Beenden der Inbetriebnahme,
(F) falls die Änderung in Schritt (D) akzeptiert wird: Archivieren der aktuellen Konfigurationsdatei als ältere Konfigurationsdatei für eine spätere Inbetriebnahme und Fortsetzen der Inbetriebnahme.
**dadurch gekennzeichnet, dass** die ältere Konfigurationsdatei in einem komprimierten Datenarchiv archiviert wird, in dem zur Überwachung der Datenintegrität zu jeder älteren Konfigurationsdatei ein zugehöriger CRC - Code gespeichert ist, und dass für den Vergleich in Schritt (B) dieser CRC-Code der älteren Konfigurationsdatei und ein CRC-Code der aktuellen Konfigurationsdatei herangezogen wird.

2. Verfahren nach Anspruch 1, **dadurch gekennzeichnet, dass** im Schritt (A) ausgehend von einer zentralen Komponente (1) rekursiv alle an die zentrale Komponente (1) angeschlossenen dezentralen Komponenten (1.1, 1.2, 1.3, 1.1.1, 1.1.2) eingelesen werden.

3. Verfahren nach Anspruch 2, **dadurch gekennzeichnet, dass** aus den dezentralen Komponenten (1.1, 1.2, 1.3, 1.1.1, 1.1.2) elektronische Typenschilder gelesen werden, die Daten zur Identifikation der dezentralen Komponenten (1.1, 1.2, 1.3, 1.1.1, 1.1.2) wie beispielsweise Typnummern, Seriennummern oder Versionsnummern enthalten.

4. Verfahren nach einem der vorhergehenden Ansprüche, **dadurch gekennzeichnet, dass** die aktuelle Konfigurationsdatei in einem für Menschen lesbaren Textformat erstellt wird.

5. Verfahren nach einem der vorhergehenden Ansprüche, **dadurch gekennzeichnet, dass** im Schritt (D) die aktuelle Konfigurationsdatei mit allen archivierten älteren Konfigurationsdateien verglichen und ein Hinweis gegeben wird, falls die aktuelle Konfigurationsdatei einer archivierten älteren Konfigurationsdatei entspricht.

6. Verfahren nach einem der vorhergehenden Ansprüche, **dadurch gekennzeichnet, dass** Datum und Uhrzeit der Erstellung der älteren Konfigurationsdatei Bestandteil des Dateinamens sind, unter dem diese ältere Konfigurationsdatei archiviert wird.

## Claims

1. Method for starting up a numerical control, with the aid of which a system configuration of components connected to the numerical control is checked, having the following steps:
(A) reading in the current system configuration and compiling a current configuration file,
(B) comparing the current configuration file with an older configuration file last archived,
(C) if no difference is determined in step (B): continuing the startup,
(D) if a difference is determined in step (B): stopping the startup and enquiring whether the determined change in system configuration is accepted,
(E) if the change is not accepted in step (D) : ending the startup, and
(F) if the change is accepted in step (D): archiving the current configuration file as older configuration file for a later startup and continuing the startup,
**characterized in that** the older configuration file is archived in the compressed data archive, in which an associated CRC code is stored for monitoring the data integrity in relation to each older configuration file, and **in that** said CRC code of the older configuration file and a CRC code of the current configuration file are used for the comparison in step (B).

2. Method according to Claim 1, **characterized in that**, starting from a central component (1), in step (A), all decentral components (1.1, 1.2, 1.3, 1.1.1, 1.1.2) connected to the central component (1) are read in recursively.

3. Method according to Claim 2, **characterized in that** electronic rating plates which contain data for identifying the decentral components (1.1, 1.2, 1.3, 1.1.1, 1.1.2) such as, for example, type numbers, serial numbers or version numbers are read from the decentral components (1.1, 1.2, 1.3, 1.1.1, 1.1.2).

4. Method according to one of the preceding claims, **characterized in that** the current configuration file is compiled in a text format readable by people.

5. Method according to one of the preceding claims, **characterized in that** in step (D) the current configuration file is compared with all archived older configuration files, and advice is given if the current configuration file corresponds to an archived older configuration file.

6. Method according to one of the preceding claims, **characterized in that** date and time of day of the compilation of the older configuration file are part of the data name under which said older configuration file is archived.

## Revendications

1. Procédé de mise en service d'une commande numérique, par lequel la configuration d'un système de composants raccordés à la commande numérique est vérifiée, le procédé présentant les étapes suivantes :
(A) lecture de la configuration en cours du système et établissement d'un fichier de configuration en cours,
(B) comparaison du fichier de configuration en cours au fichier de configuration plus ancien archivé en dernier lieu,
(C) au cas où aucune différence n'est constatée à l'étape (B), poursuite de la mise en service,
(D) au cas où une différence est constatée à l'étape (B), interruption de la mise en service et vérification si la modification constatée de la configuration du système est acceptée,
(E) au cas où la modification n'est pas acceptée à l'étape (D), clôture de la mise en service,
(F) au cas où la modification est acceptée à l'étape (D), archivage du fichier de configuration en cours en tant que fichier de configuration plus ancien pour une mise en service ultérieure et poursuite de la mise en service,
**caractérisé en ce que**
l'ancien fichier de configuration est archivé dans une archive comprimée de données dans laquelle un code CRC associé est conservé en mémoire pour surveiller l'intégrité des données de chaque fichier ancien de configuration et
**en ce que** ce code CRC de l'ancien fichier de configuration et un code CRC du fichier de configuration en cours interviennent dans la comparaison effectuée à l'étape (B).

2. Procédé selon la revendication 1, **caractérisé en ce qu'**à l'étape (A), partant d'un composant central (1), tous les composants décentralisés (1.1, 1.2, 1.3, 1.1.1, 1.1.2) raccordés au composant central (1) sont lus de manière récursive.

3. Procédé selon la revendication 2, **caractérisé en ce que** des écrans électroniques de type qui contiennent les données d'identification des composants décentralisés (1.1, 1.2, 1.3, 1.1.1, 1.1.2), par exemple le numéro du type, le numéro de série ou le numéro de version, sont lus pour les composants décentralisés (1.1, 1.2, 1.3, 1.1.1, 1.1.2).

4. Procédé selon l'une des revendications précédentes, **caractérisé en ce que** le fichier de configuration en cours est établi en un format de texte lisible par l'homme.

5. Procédé selon l'une des revendications précédentes, **caractérisé en ce qu'**à l'étape (D), le fichier de configuration en cours est comparé à tous les fichiers de configuration anciens archivés et **en ce qu'**une indication est donnée au cas où le fichier de configuration en cours correspond à un fichier de configuration ancien archivé.

6. Procédé selon l'une des revendications précédentes, **caractérisé en ce que** la date et l'heure de l'établissement du fichier de configuration ancien font partie du nom du fichier sous lequel ce fichier de configuration ancien a été archivé.
